# EUROPÄISCHE PATENTANMELDUNG

(11) **EP 0 539 712 A1**
(43) Veröffentlichungstag der Anmeldung: **05.05.1993**
(21) Anmeldenummer: 92115896.0
(22) Anmeldetag: 17.09.1992
(51) Int. Cl.: C04B 28/14, E04B 1/94

(54) **Feuerfestes Dämmaterial für insbesondere den baulichen Brandschutz**

(30) Priorität: 26.10.1991 DE 4135416
(71) Anmelder: DEUTSCHE METALLTÜREN-WERKE DMW SCHWARZE GmbH & CO. INDUSTRIETORE KG, D-33649 Bielefeld (DE)
(72) Erfinder: Krämer, Walter, W-4554 Eggermühlen-Besten (DE); Meyer, Reinhard, W-4800 Bielefeld 14 (DE)
(74) Vertreter: Busse & Busse Patentanwälte

(57) **Zusammenfassung**

Die Erfindung bezieht sich auf ein feuerfestes Dämmaterial für insbesondere den baulichen Brandschutz, vorzugsweise zur Verwendung als Kerndämmung in gegen Feuer zu schützenden Bau- und Funktionsteilen, wie beispielsweise Brandwänden, Feuerschutztüren, Feuerschutztoren, Feuerschutzklappen, Fahrstuhlschächten, Klima- und Lüfungskanälen, Decken- und Wandverkleidungen, Ummantelungen von Stahlkonstruktionen und dergleichen. Um insbesondere ein feuerfestes Dämmaterial geschaffen zu haben, mit dem sicher Bau- und Funktionsteile gegen Feuer zu schützen und die brandschutztechnischen Sicherheitsforderungen gem. DIN 4102 zu erfüllen sind, weist das Dämmaterial eine Mineralstoffmischung auf 7,5 bis 10 Gew.-% feinkörnigem Granulat aus silikatischem Vulkangestein, 5 bis 15 Gew.-% porosiertem Aluminiumsilikat und 40 bis 55 Gew.-% reaktionsträgem Calciumsulfat-Halbhydrat auf.

## Beschreibung

Die Erfindung bezieht sich auf ein feuerfestes Dämmaterial für insbesondere den baulichen Brandschutz, vorzugsweise zur Verwendung als Kerndämmung in gegen Feuer zu schützenden Bau- und Funktionsteilen, wie beispielsweise Brandwänden, Feuerschutztüren, Feuerschutztoren, Feuerschutzklappen, Fahrstuhlschächten, Klima- und Lüftungskanälen, Decken- und Wandverkleidungen, Ummantelungen von Stahlkonstruktionen und dergleichen.

Herkömmlicherweise erfolgt die Erstellung von gegen Feuer zu schützenden Bau- und/oder Funktionsteilen mit Feuerschutzmaßnahmen gemäß DIN 4102 ("Brandverhalten von Baustoffen und Bauteilen") nach überwiegend manuell ablaufenden Herstellungsverfahren. Hierbei wird der funktionsbedingt notwendige Wärmedämmkörper aus nicht brennbaren Stoffen für das jeweilige gegen Feuer zu schützende Bau- und/oder Funktionsteil in Einzelfertigung erstellt. Großformatige, nach DIN-Richtlinien geprüfte, nicht brennbare, zum Teil mit Faserstoffen armierte Platten, aus zum Beispiel Gips, Calciumsilikat, Vermikulit, Schaumglas, Mineralwolle oder Steinwolle werden manuell in die meist kastenförmigen Innenräume der Bau- und/oder Funktionsteile eingelegt und mit geeigneten Befestigungsmitteln, beispielsweise Stahlklammern, gehalten. Bei zu ummantelnden Flächen sind die Platten oder Streifen um die zu schützenden Bauteile zu legen,miteinander zu vernageln, zu verschrauben oder zu verkleben.Hierbei sind die Platten oder Streifen, je nach Anforderung der Feuerwiderstandsklasse gemäß DIN 4102, ein- oder mehrlagig und ggf. in verschiedenen Dicken und Rohdichten anzuordnen. Um einen direkten Wärmedurchgang zu vermeiden, ist sicherzustellen, daß nach Einlegen des Wärmedämmaterials keine Undichtigkeiten bzw. Spalte zwischen den Wärmedämmplatten oder Wärmedämmstreifen entstehen.

Diese herkömmliche Verfahrensweise ist nicht nur arbeits- und kostenintensiv, sondern macht auch außerordentliche Kontrollarbeiten erforderlich. Durch das Zuschneiden der Wärmedämmplatten oder -streifen aus handelsüblichen Standardplatten fallen zudem unabdingbar erhebliche Mengen Abfall an, die nicht nur die Produktionskosten erhöhen, sondern sehr kostenaufwendig umweltgerecht zu entsorgen sind. Aufgrund von Schwindung oder Sitterung der Wärmedämmplatten unter hohen Temperaturen bei Brandeinwirkung kann es insbesondere in den kritischen Randzonen der Bau- bzw. Funktionsteile zu Leerräumen kommen, die einen ungehinderten Wärmefluß zu der dem Feuer abgewandten Seite zulassen, wodurch die Feuer- bzw. Brandschutzfunktion nicht mehr zu erfüllen ist. Um derartige Leerräume unter Brandeinwirkung zu vermeiden, ist es zudem bekannt, zwischen Innen- und Außenkonturen von Wärmedämmplatten oder auch zwischen verschiedenen Wärmedämmstoffen zusätzliche Speziallaminate vorzusehen, die durch Feuereinwirkung aufschäumen, so daß bei Schwindung oder Sinterung Leerräume auszufüllen sind. Diese zwingend notwendigen Präventivmaßnahmen verteuern den ohnehin schon aufwendig zu erstellenden Wärmedämmkörper in nicht unerheblicher Weise. Desweiteren können bei den bekannten Platten und Verbundmaterialien Zersetzungsprodukte aus organischen Bindemitteln oder Zusatzstoffen anfallen, die unter Brandeinwirkung als brennbare und/oder toxische Gase austreten. Im Falle eines brennbaren Gasstromes entstehen außen auf dem Bau-teil offene Flammen, die zu einer schnellen Ausweitung des Brandes führen können.

Aus der DE-PS 40 18 056 ist ein feuerfestes Dämmaterial bekannt, das vorzugsweise aus mineralischen Rohstoffen wie Kaolin, Natrium- oder Kaliummetasilikat, gebranntem Gips, Glimmer, Aluminiumsilikat, Vermiculit, Tonerdeschmelzzement und/oder Glasfaserzusätzen besteht. Hierbei wird durch Zusatz von Wasser eine gießfähige Masse erstellt, mit der die Innenräume von Formteilen aufzufüllen sind. Es handelt sich hierbei uni eine Füllmasse in gießfähiger bis plastischer Konsistenz, die mit einem Wasserbedarf von 0,4 bis 0,7 Gewichtsteilen einzubringen ist. Diese Füllmasse führt zwar zu einem kompakten Wärmedämmkörper mit funktionsgerechter Steuerstabilität, jedoch ist die Einbringung des Dämmaterials noch aufwendig. Nachteilig wirkt sich zudem der hohe Wassergehalt des Wärmedämmstoffes aus, der energieaufwendige Trocknungsarbeiten erforderlich macht mit dem Nachteil einer verzögerten Arbeitstaktfolge beim Herstellungsverfahren.

Der Erfindung liegt daher die Aufgabe zugrunde, ein feuerfestes Dämmaterial zu schaffen, mit dem sicher Bau- und Funktionsteile gegen Feuer zu schützen und die brandschutztechnischen Sicherheitsforderungen gemäß DIN 4102 zu erfüllen sind. Darüber hinaus soll dieses Dämmaterial mit vermindertem Aufwand vorzusehen sein.

Zur Lösung dieser Aufgabe zeichnet sich das feuerfeste Dämmaterial nach der Erfindung durch die im kennzeichnenden Teil des Anspruchs 1 angegebenen Merkmale aus. Hinsichtlich vorteilhafter Ausgestaltungen wird auf die Ansprüche 2 bis 6 verwiesen.

Das feuerfeste Dämmaterial nach der Erfindung ist ein mineralisches, nicht brennbares und schadstofffreies Gemisch, das in einer erdfeuchten Konsistenz aufbereitet wird und dann in den konstruktionsbedingen Innenräumen der gegen Feuer zu schützenden Bau- und Funktionsteilen zu einem schwindungsfreien Wärmedämmkörper in hinreichender Festigkeit erhärtet, ohne daß überhaupt ein Trocknungsvorgang bis auf die Ausgleichsfeuchte erforderlich ist. Damit ist dieses Dämmaterial in außerordentlich energiesparender Weise mit dem Vorteil einer erhöhten Arbeitstaktfolge vorzusehen. Zu entsorgende Abfallmaterialien fallen zudem nicht an.

Aus chemisch indifferenten, mineralischen Leichtstoffen mit einem Schüttgewicht von ca. 80 bis 200 g/l und reaktionsträgem Calciumsulfat-Halbhydrit, ist die Mineralstoffmischung in der speziellen Zusammensetzung so aufzubereiten, daß unter Zugabe von Wasser eine erdfeuchte Masse entsteht, die in bzw. auf den zu schützenden Bauteilen ein- bzw. aufzubringen ist. Die erfindungsgemäß vorgesehenen leichtgewichtigen granulatfömigen Mineralstoffe weisen ein sehr geringes Wassersaugvermögen auf. Bei Zumischung von reaktionsträgem Calciumsulfat-Halbhydrit ist ein geringer Anteil chemisch nicht gebundenem mechanischem Wasser erforderlich, ohne die Abbindereaktion des Calciumsulfat-Halbhydrates zu beeinträchtigen. So gebildete Wärmedämmkörper zeigen bei einem Füllgewicht von ca. 400g/l nach der Erhärtung keinerlei Schwindung. Die gegen Feuer zu schützenden Bau- und Funktionsteile sind in sehr rascher Folge mit dem entsprechenden Wärmedämmstoff zu versehen. Dazu wird das vorwiegend aus Blech bestehende Bau- bzw. Funktionsteil mit dem Wärmedämmstoff befüllt oder ummantelt. Das für die angestrebte Feuerwiderstandszeit erforderlich Dickenprofil bestimmt das Wärmedämmaterialvolumen. Zur Erstellung der Bedarfsmenge an Wärmedämmaterial wird aus 7,5 bis 20 Gewichtsteilen silikatischem Granulat, 5 bis 10 Gewichtsteilen porosiertem Aluminiumsilikat, 40 bis 50 Gewichtsteilen reaktionsträgem Calciumsulfat-Halbhydrat eine Trockenmischung erstellt und diese unter Beimengung von Wasser zu einer 7,5 bis 12,5 Gewichtsteilen mechanisches Wasser enthaltenden Masse aufbereitet. Diese so erhaltene erdfeuchte Dämmstoffmischung mit einem Schüttgewicht von ca. 300 bis 350 g/l ist in das bereitstehende Bau- und/oder Funktionsteil einzubringen, auf der zu verfüllenden Bauteilfläche zu egalisieren, wobei je nach gewollter Rohdichte das Wärmedämmaterial im Bauteil zusätzlich verdichtet werden kann.

Die im verfüllten Wärmedammstoff mit Verzögerung stattfindende chemische Reaktion zur Bildung von Calciumsulfat-Dihydrat bewirkt die Verfestigung, wobei dieser Vorgang nach ca. 10 bis 15 Minuten abgeschlossen ist. Danach verbleibt im Wärmedämmstoff eine mechanische Ausgleichsfeuchte von ca. 7,5 bis 12,5 Gew.-%. Die Druckfestigkeit von 1,5 bis 4,5 Newton pro Quadratmillimeter bietet eine hinreichende Dimensionsstabilität, die auch unter der mehr als 2-stündigen Feuerwirkung bis ca. 1000 °K schwindungsfrei verbleibt und eine Überleitung von Feuer verhindert. Ein weiterer wesentlicher Vorteil des erfindungsgemäßen Dämmaterials besteht darin, daß der daraus gebildete Wärmedämmkörper einen sehr hohen Anteil an chemisch gebundenem Wasser enthält, welches unter Feuereinwirkung von Wasserdampf freigesetzt wird. Diese Wasserverdampfung führt zur Kühlung des zu schützenden Bauteils, wobei die Temperatur im Bereich von ca. 1.000 °K solange verbleibt, wie chemisch gebundenes Wasser vorhanden ist. Durch diese endotherme Wärmebindung wird die Feuerwiderstandszeit des Bauteils hinreichend festlegbar.

## Patentansprüche

1. Feuerfestes Dämmaterial für insbesondere den baulichen Brandschutz, vorzugsweise zur Verwendung als Kerndämmung in gegen Feuer zu schützenden Bau- und Funktionsteilen, wie beispielsweise Brandwänden, Feuerschutztüren, Feuerschutztoren, Feuerschutzklappen, Fahrstuhlschächten, Klima- und Lüftungskanälen, Decken- und Wandverkleidungen, Ummantelungen von Stahlkonstruktionen und dergleichen, **dadurch gekennzeichnet**, daß es eine Mineralstoffmischung aus 7,5 bis 20 Gew.-% feinkörnigem Granulat aus silikatischem Vulkangestein, 5 bis 15 Gew.-% porosiertem Aluminiumsilikat und 40 bis 55 Gew.-% reaktionsträgem Calciumsulfat-Halbhydrat aufweist.

2. Feuerfestes Dämmaterial nach Anspruch 1, **dadurch gekennzeichnet**, daß die Mineralstoffmischung einen mechanischen Wassergehalt (Ausgleichsfeuchte) von 7,5 bis 12,5 Gew.-% aufweist.

3. Feuerfestes Dämmaterial nach Anspruch 1 oder 2, **dadurch gekennzeichnet**, daß die Mineralstoffmischung einen im Bauteil dimensionsstabil erhärtenden Wärmedämmkörper ausbildet.

4. Feuerfestes Dämmaterial nach einem der Ansprüche 1 bis 3, **dadurch gekennzeichnet**, daß die Mineralstoffmischung einen ein- oder mehrschichtigen Dämmstoffkörper ausbildet.

5. Feuerfestes Dämmaterial nach einem der Ansprüche 1 bis 4, **dadurch gekennzeichnet**, daß es einen mechanisch verdichteten Wärmedämmstoffkörper ausbildet.

6. Feuerfestes Dämmaterial nach einem der Ansprüche 1 bis 5, **dadurch gekennzeichnet**, daß es eine variable Dichte aufweist.
